(19) **Europäisches Patentamt**

**European Patent Office**

**Office européen des brevets**

(11) **EP 0 718 613 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.[7]: **G01M 3/20**, H01J 49/04

(21) Anmeldenummer: **95119823.3**

(22) Anmeldetag: **15.12.1995**

(54) **Verfahren zur Gasanalyse und Gasanalysator**

Method for analysing gas and gas analyser

Méthode pour l'analyse de gaz et analyseur de gaz

(84) Benannte Vertragsstaaten:
**CH DE ES IT LI SE**

(30) Priorität: **23.12.1994 CH 392394**

(43) Veröffentlichungstag der Anmeldung:
**26.06.1996 Patentblatt 1996/26**

(73) Patentinhaber: **Unaxis Balzers Aktiengesellschaft**
**9496 Balzers (LI)**

(72) Erfinder:
• **Stoeckli, Armin L., Dr. Physiker**
**CH-7320 Sargans (CH)**
• **Waelchli, Urs, Dr. Physiker UNI**
**CH-8887 Mels (CH)**
• **Boesch, Martin, Dr. Physiker ETH**
**CH-9478 Azmoos (CH)**

(74) Vertreter: **Troesch Scheidegger Werner AG**
**Patentanwälte**
**Postfach**
**8032 Zürich (CH)**

(56) Entgegenhaltungen:
**EP-A- 0 498 434        EP-A- 0 607 908**
**DE-A- 3 124 205**

**Beschreibung**

Die vorliegende Erfindung betrifft ein Verfahren zur Gasanalyse nach dem Oberbegriff von Anspruch 1, einen Gasanalysator nach dem Oberbegriff von Anspruch 2 sowie dessen Verwendung nach Anspruch 8.

Bei der Erzeugung von Hochvakuum (HV) oder Ultrahochvakuum (UHV) werden vielfach Hochvakuumpumpen mit Gasart-abhängiger Kompression eingesetzt. Bezüglich Vakuumbereichdefinition und Pumpendefinitionen sei auf "Grundlagen der Vakuumtechnik, Berechnungen und Tabellen", Leybold AG, Kat.Nr. 199 89 (Lit. 1), verwiesen. Beispielsweise wirken mechanisch-kinetische Vakuumpumpen im molekularen Druckbereich mit Gasart-abhängiger Kompression, als Funktion der Art exp($\sqrt{m}$), worin m die Masse der Gasmoleküle der betrachteten Gasart bezeichnet.

In der Praxis wirkt sich die Gasart-abhängige Kompression solcher Pumpen insbesondere für Gase kleiner Molekülmassen aus. Darunter seien Gase verstanden, deren Moleküle eine Masse $m \leq 28u$ aufweisen, worin u die "Atomic Mass Unit" bedeutet.

Es ist auch bekannt, beispielsweise bei Lecksuchanordnungen, die Gasart-abhängige Kompression solcher Pumpen als Vorteil auszunützen, weil derartige Pumpen, im Gegenstromprinzip, als "Tiefpass-Massefilter" wirken. Die für Gasarten kleiner Molekülmasse vorherrschende kleine Kompression ermöglicht eine Diffusion der genannten Gasart entgegen der Pumpenförderrichtung.

Anderseits kann aber das Vorliegen Gasart-abhängiger Kompression auch ein gewichtiger Nachteil sein, weil sich nämlich der Partialdruck hochdruckseitig einer derartigen Pumpe oder Pumpenstufe, wegen der genannten relativ geringen partiellen Kompression, auf die Partialdruckverhältnisse an ihrem Niederdruckeinlass auswirkt. Wenn die Kompression bezüglich einer betrachteten Gasart hoch ist, dann wirken sich die Partialdruckverhältnisse am hochdruckseitigen Ausgang der Pumpe nur vernachlässigbar auf die Partialdruckverhältnisse am niederdruckseitigen Eingang der Pumpe aus. Das Verhältnis der Partialdrücke hochdruckseitig-zu-niederdruckseitig der Pumpe ist dann durch andere Prozesse, wie etwa Desorption, bestimmt.

Bei leichten Gasen ist, wie erwähnt, die Kompression derartiger Pumpen klein, so dass der Partialdruck am hochdruckseitigen Pumpenauslass den Partialdruck am niederdruckseitigen Pumpeneinlass, z.B. nach Wutz 1992.1, S. 267, bestimmt. Zur Beeinflussung des Partialdruckes auf der Niederdruckseite solcher Pumpen bzw. Pumpenstufen, unabhängig davon, ob dieser Partialdruck erhöht oder gesenkt werden soll, stehen vorerst folgende zwei bekannte Prinzipien zur Verfügung:

1. Veränderung der Pumpenkompression:

- Eine Verminderung der Pumpenkompression kann durch Drehzahlreduktion und/oder Vergrössern des Pumpeninnenleitwertes oder durch Reduktion der Anzahl wirksamer Pumpenstufen erreicht werden.

- Eine Erhöhung der Kompression und damit Entkopplung des niederdruckseitigen Partialdruckes vom hochdruckseitigen kann durch Drehzahlerhöhung an der Pumpe und/oder Verkleinerung des Pumpeninnenleitwertes und/oder durch Hinzufügen von zusätzlichen Pumpenstufen erreicht werden. Dabei sind der Drehzahlerhöhung sowie der Verkleinerung des Pumpeninnenleitwertes enge mechanische Grenzen gesetzt.

2. Partialdruckveränderung am hochdruckseitigen Pumpenauslass:

- Durch Erhöhung des Gesamtdruckes am hochdruckseitigen Pumpenauslass ergibt sich auch eine Erhöhung eines Partialdruckes am niederdruckseitigen Pumpeneinlass.

- Eine Gesamtdruckabsenkung und/oder das Erzeugen einer gezielten Gasspülung stromab des hochdruckseitigen Pumpenauslasses, d.h. der Vorvakuumpumpe, ergeben eine Partialdruckabsenkung am niederdruckseitigen Pumpeneinlass.

Solche Lösungsansätze sind bekannt. Im weiteren ist es beispielsweise aus der US-A-4 893 497 bekannt, hochdruckseitig einer Molekularpumpe an einer Lecksuchanordnung ein Spülgasventil vorzusehen, um nach erfolgtem Lecksuchbetrieb eine Gasspülung während einer Spülphase vorzunehmen.

Aus der EP 0 607 908 ist es bekannt, zu analysierendes Prozessgas aus einer Prozesskammer relativ hohen Druckes der auf relativ tiefem Druck gehaltenen Kammer eines Massenspektrometers über eine Blende zuzuführen. Dabei wird die Kammer des Massenspektrometers offensichtlich mittels einer Pumpstufe, deren Niederdruck-Eingang mit dieser Kammer verbunden ist, auf dem erwähnten Druck gehalten. Eine weitere Gasströmung wird, prozesskammerseitig der Blende, als Schirmgasströmung gegen die Prozesskammer hin erstellt.

Wie eingangs erwähnt, bezieht sich die vorliegende Erfindung auf die Messtechnikgebiete Gasanalyse und insbesondere Lecksuche. Im Unterschied zu Evakuierungstechniken für Vakuumgefässe der Verfahrenstechnik, bei denen im wesentlichen stationäre Druckverhältnisse angestrebt werden, ist bei den erwähnten Messtechniken der sogenannten Systemantwort auf schnelle Aenderungen des Messsignals hohe Bedeutung beizumessen.

Die vorliegende Erfindung setzt sich zum Ziel, von einem Verfahren bzw. Gasanalysator obgenannter Art ausgehend ein Verfahren bzw. einen Analysator zu schaffen, bei dem:

-    ein schnelles dynamisches Verhalten, d.h. kurze "response-time",

-    hohe Empfindlichkeit

auf einfache, kostengünstige Weise erzielt wird, d.h. Anforderungen erfüllt werden, die, wie hohe Empfindlichkeit und schnelles dynamisches Verhalten, sich in der Vakuummesstechnik üblicherweise gewissermassen ausschliessen.

Dies wird bei Ausbildung des genannten Verfahrens bzw. des genannten Analysators nach dem Kennzeichen von Anspruch 1 bzw. 2 erreicht.

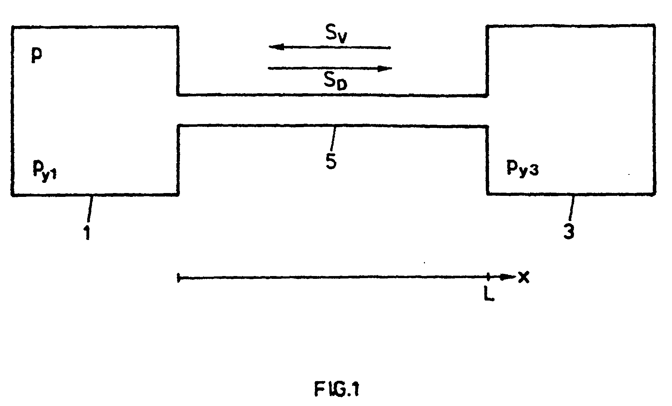

Wie bekanntlich mit einer gezielt erstellten Gasströmung die partielle Kompression beeinflusst werden kann, soll anhand von Fig. 1 erläutert werden.

In Fig. 1 bezeichnen 1 und 3 zwei grosse Behälter, welche bezüglich Totaldruck p eines Gasgemisches Z ausgeglichen seien. Der Partialdruck $p_y$ eines Gasanteiles Y betrage im Behältnis 1 $p_{y1}$ und im Behältnis 3 $p_{y3}$. Es gelte

$$P_{y1} \gg P_{y3}.$$

Damit ergibt sich eine Gasdiffusionsströmung in Richtung des Druckgradienten, wie mit $S_D$ eingetragen ist. Wird nun für die Gasart Y in der Verbindungsleitung 5 eine knudsensche oder eine viskose Strömung $S_V$ gegen die Diffusionsströmung $S_D$ erstellt, so ergibt sich entlang der x-Koordinate, bei Annahme von partialdruckproportionaler Gaskonzentration c und mit der Vereinfachung gleicher Strömungsgeschwindigkeit über dem Leitungsquerschnitt,

$$c\,(x) = c_1 \cdot \exp\,(-x/\lambda),$$

wobei bedeuten:

$$c\,(x) = \text{Konzentration des Gases Y am Orte x,}$$

und $\lambda = D/v_v$, mit D als Diffusionskonstante des Gases Y im Gas Z und mit $v_v$ als Strömungsgeschwindigkeit der nichtmolekularen Strömung $S_v$.

Bezüglich der Definitionen der molekularen, knudsenschen und viskosen Strömung sei auf Lit. 1 verwiesen.

Es ergibt sich für das Gas Y die partielle Kompression zwischen den Orten x = 0 und x = L zu

$$\frac{c\,(o)}{c\,(L)} = \exp\,(L/\lambda) \tag{1}$$

Daraus ist ersichtlich, dass durch Ueberlagerung einer nichtmolekularen Strömung, d.h. einer Strömung im knudsenschen oder im viskosen Bereich, eine Verkleinerung der Diffusionsströmung $S_D$ der betrachteten Gasart erstellt werden kann. Somit wird die partielle Kompression zwischen den Behältnissen 1 und 3 in weiten Grenzen durch die erstellte Strömung $S_V$ einstellbar. Um die partielle Kompression zwischen den Behältern 1 und 3 zu erhöhen, wird die überlagerte Gasströmung $S_V$ so ausgelegt, dass die Strömungsgeschwindigkeit $v_v$ die Diffusion der betrachteten Gasart Y gar überkompensiert.

Die überlagerte Strömung $S_V$ wird durch eine Strömung des Gases Z mit der Gasart Y oder durch Strömung eines die Gasart Y nicht enthaltenden Gases erzeugt. Ueber die Länge der nichtmolekularen Gasströmung kann für die eine oder für mehrere betrachtete Gasarten eine beliebige Kompression $\geq 1$ eingestellt werden. Wie aus Ausdruck (1) ersichtlich, ist anzustreben, das Verhältnis $L/\lambda$ möglichst gross zu wählen, um die partielle Kompression entlang des nichtmolekularen Strömungsweges möglichst nachhaltig zu beeinflussen.

Erstaunlicherweise kann mithin die gestellte Aufgabe durch Ausnützung dieser Gesetzmässigkeiten erfindungsgemäss gelöst werden. Es kann damit die Gasart-spezifische partielle Kompression nach der erwähnten ersten Pumpenstufe einfach eingestellt, insbesondere erhöht werden bzw. stabilisiert werden. Dies über eine Drehzahlsteigerung an einer Pumpenstufe oder durch Verkleinerung eines Pumpeninnenleitwertes oder durch Zufügen zusätzlicher Pumpenstufen zu erreichen, ist bei den angesprochenen Techniken unverhältnismässig teuer und verringert die Langzeitzuverlässigkeit der angesprochenen Geräte.

Wenn im weiteren von mindestens einer "Pumpenstufe" gesprochen wird, so umfasst dies selbstverständlich auch eine baulich einheitliche Pumpe mit mehreren Pumpenstufen.

Bei bevorzugtem Einsatz einer kinetischen Vakuumpumpenstufe als die erwünschte weitere Pumpenstufe, die im knudsenschen oder viskosen Druckbereich arbeitet, gegebenenfalls zusätzlich zu einer Drossel, kann es sich gemäss M. Wutz et al., "Theorie und Praxis der Vakuumtechnik", 5. Auflage, S. 646, Tabelle 16.11, z.B. um eine im knudsenschen oder im viskosen Bereich arbeitende Gasring-Vakuumpumpe, Turbovakuumpumpe, darunter um eine Axialvakuumpumpe oder um eine Radialvakuumpumpe handeln, insbesondere vorzugsweise um eine Holweck-Pumpe oder um eine Turbomolekular-Holweck-Kombination, insbesondere um eine sogenannte "wide range"-Pumpe, nicht aber allein um eine Turbomolekularpumpe, welche nur im Molekularströmungsbereich arbeitet, ebensowenig wie z.B. um eine Membranpumpe oder Drehschieberpumpe, die keine kinetischen Vakuumpumpen sind. Die letzterwähnte Pumpe kann aber der im viskosen oder knudsenschen Bereich arbeitenden Pumpe vorgeschaltet werden als ersterwähnte Pumpe bzw. Pumpenstufe. Durch das erfindungsgemäss eingelassene Strömungsgas wird die partielle Kompression über der erwähnten, im knudsenschen oder viskosen Druckbereich arbeitenden Pumpenstufe beeinflusst.

Als Pumpenstufen-bewirkte Förderströmung wird die Gasströmung verstanden, welche eine Pumpe bzw. Pumpenstufe aufgrund ihrer Kompressionseigenschaften bewirkt und ermöglicht. Wird nun grundsätzlich durch die Pumpenstufe, die im knudsenschen oder viskosen Druckbereich arbeitet, eine Gasströmung erzeugt und dort der Diffusionsströmung entgegen der Pumpenförderströmung überlagert, so ergibt sich

- bei überlagerter Strömungsrichtung entgegen der Diffusionsrichtung eine Diffusionshemmung oder - unterbindung, womit auch für ein betrachtetes leichtes Gas die Kompression erhöht wird;

- eine Stabilisierung der Gaszusammensetzung am niederdruckseitigen Einlass der kinetischen Vakuumpumpe, insbesondere bei Verwendung eines Leitwert-begrenzenden Strömungselementes.

Die Erfindung wird anschliessend beispielsweise anhand von Figuren erläutert.

Es zeigen:

Fig. 1 schematisch auch erfindungsgemäss ausgenützte, an sich bekannte Verhältnisse, dargestellt für das Verständnis des erfindungsgemässen Vorgehens;

Fig. 2 eine bekannte, für die Gasanalyse und insbesondere für die Lecksuche eingesetzte, mechanisch-kinetische Pumpe des Typs TPD 022 der Firma Balzers-Pfeiffer, Wetzlar, zur Erläuterung eines Berechnungsbeispiels;

Fig. 3 bis 6 schematisch verschiedene bevorzugte Realisationsmöglichkeiten der erfindungsgemässen Verfahren bzw. der erfindungsgemässen Geräte;

Fig. 7 das Vakuumschema einer bevorzugten Ausführungsvariante eines erfindungsgemässen Lecksuchgerätes;

Fig. 8 und 9 über der Zeitachse je die mit Anordnung gemäss Fig. 7 und einer bekannten Vergleichsanordnung gemessenen Signale.

Die grundsätzlich bekannten Verhältnisse, erläutert anhand von Fig. 1, seien an einem Beispiel einer Pumpe, die sich besonders gut für den erfindungsgemässen Einsatz an Analyseoder Lecksuchgeräten eignet, mehr auf die Praxis bezogen.

Dabei sei an dieser Stelle vermerkt, dass der erfindungsgemäss angesprochenen Gasanalyse und der vorrangig angesprochenen Verwendung im Rahmen der Lecksuchtechnik gemeinsam ist, dass die verwendeten Gasanalysegeräte und Gasdetektoren hochsensibel auf eingangsseitige Gasdrücke sind, die ihren Nominaldruck übersteigen. Deshalb muss der Kompressionsbeherrschung und -stabilisierung eingangsseitig vorgesehener Vakuumpumpen besondere Beachtung geschenkt werden. Dass hier die Ausnützung der einfachen Verhältnisse, wie sie anhand von Fig. 1 erläutert wurden, die geforderte Beherrschbarkeit und Stabilität nebst den zur Aufgabe gemachten Eigenschaften erbringt, ohne Beizug der eingangs erwähnten aufwendigen Massnahmen, erstaunt. Dies, gerade weil das vorgehen nach Fig. 1 bislang, wenn überhaupt, lediglich für bekannt weit weniger kritische Pumptechniken eingesetzt wurde, wie z.B. für die Evakuierung von Hoch- oder Ultrahochvakuum-Arbeitskammern.

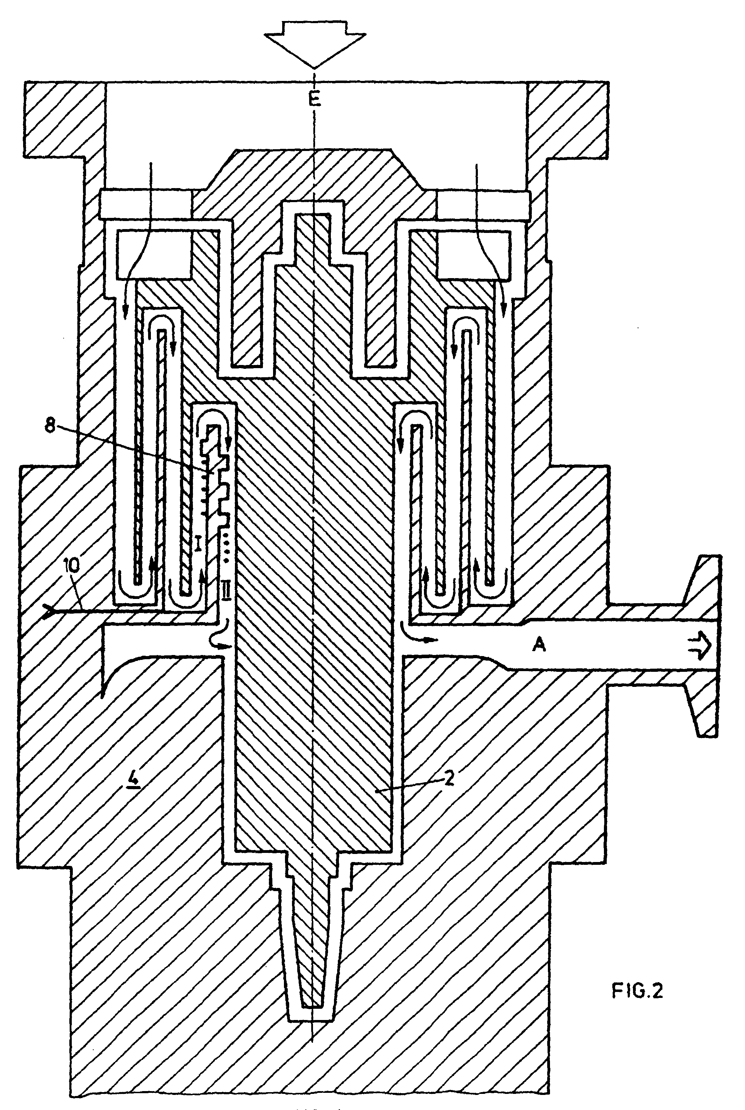

In Fig. 2 ist eine mechanisch-kinetische Pumpe, eine Holweck-Pumpe des Typs PTD 022 der Firma Balzers-Pfeiffer, Wetzlar, dargestellt.

An der in an sich bekannter Art und weise mit Rotor 2 und Stator 4 aufgebauten Pumpe ist, wie auszugsweise und schematisch bei 8 angedeutet, am Stator 4 eine Spirale eingearbeitet. Die für das erfindungsgemässe vorgehen eingesetzte Kompressions-Stell-Gas GS vorgesehene Leitung 10 mündet vor den inneren zwei Pumpenstufen I, II ein.

Der Spalt entlang den beiden Stufen ist wie folgt dimensioniert:

- Nuttiefe d = 2 mm;

- Nutbreite h = 3mm;

- die Länge der Spiralnut = 40cm.

Der Druck am Ausgang A der Molekularpumpe betrage 5mbar, womit man sich, mit 2mm Nuttiefe, zumindest am Ausgang A der Pumpe, im viskosen Druckbereich befindet.

Zur Erzeugung der Gasströmung $S_V$, analog zu Fig. 1, durch die Molekularpumpe wird, als Beispiel eines leichten Gases, heliumarme Luft oder trockener Stickstoff durch Leitung 10 eingesetzt.

Es ergibt sich für den Diffusionskoeffizienten

$$D(p) = (p/p_o) \cdot D(p_o),$$

für Helium in Luft:

$$1000\text{mbar}/(5\text{mbar}) \cdot 0{,}58\text{cm}^2/\text{s} = 116\text{cm}^2/\text{s}.$$

Die Strömung durch die Pumpe erfolgt mit 0.01mbar l/s, woraus sich ergibt:

$$v_V \ (5\text{mbar}) = \frac{0.01\text{mbar} \cdot 10^3 \ \frac{\text{cm}^3}{\text{s}}}{5\text{mbar} \cdot 0{,}2\text{cm} \cdot 0{,}3\text{cm}} = 33\text{cm/s}$$

Im weiteren ergibt sich

$$\lambda = \frac{116\text{cm}^2 \cdot \text{s}^{-1}}{33\text{cm} \cdot \text{s}^{-1}} = 3{,}48\text{cm}$$

Im Gegensatz zu den Verhältnisen, wie sie in Fig. 1 angenommen wurden, sind, entsprechend den beiden Behältnissen 1 und 3, niederdruck- und hochdruckseitig der Molekularpumpe die Totaldrucke P nicht gleich. Dies hat zur Folge, dass sowohl die Diffusionskonstante D wie auch die Strömungsgeschwindigkeit $v_V$ entlang der Pumpennut nicht konstant sind. Weil aber sowohl die Diffusionskonstante D wie auch die Strömungsgeschwindigkeit $v_V$ umgekehrt proportional zum Druck sind, bleibt $\lambda$ druckunabhängig, solange viskose Strömung besteht.

Die partielle Heliumkompression über die Länge L von 40cm ergibt sich zu

$$k_{He} = \exp(40\text{cm}/3{,}48\text{cm}) = 10^5.$$

In der praktischen Realisierung ist allerdings die erreichte Heliumpartialkompression $k_{He}$ kleiner als der berechnete Wert, da zwischen den Nutenzügen der Holweck-Pumpe eine Gasrückströmung stattfindet und die Gasgeschwindigkeit über dem Nutenquerschnitt nicht konstant ist. Ebenfalls ergibt sich eine Reduktion der durch die Strömung erreichten partialen Heliumkompression, wenn nicht über die ganze Spaltlänge von 40cm eine viskose Strömung herrscht.

Das beschriebene Vorgehen wird bei Gasanalyseanordnungen oder insbesondere Lecksuchanordnungen mit leichten Testgasen eingesetzt, bei denen eine Hochvakuumpumpe oder -pumpenstufe nach dem Hauptstromprinzip, nach dem Gegenstromprinzip oder nach dem Teilgegenstromprinzip eingesetzt wird.

An der Pumpe nach Fig. 2 können die der Leitung 10 vorgelagerten Stufen im molekularen Bereich arbeiten und somit "gegenstromfähig" sein.

Bei der Lecksuche oder Gasanalyse nach dem Hauptstromprinzip wird der Testgasanschluss über eine Hochvakuumpumpe sowie eine Vorvakuumpumpe evakuiert und ist direkt mit einem Testgas- bzw. Analysegasdetektor bzw. Analysegerät, wie insbesondere einem Massenspektrometer, dabei vorzugsweise einem Quadrupol-Massenspektrometer, verbunden. Bei der Lecksuche oder Gasanalyse nach dem Gegenstromprinzip wird der Testgas- bzw. Analysegasanschluss an die Hochdruckseite einer Hochvakuumpumpe angeschlossen, deren Niederdruckseite mit dem Testgasdetektor bzw. Analysegerät, wie dem erwähnten Massenspektrometer, verbunden ist. Das leichte Testgas oder leichte Analysegasanteile strömen im Gegenstrom durch die dem Testgasdetektor bzw. Analysegerät vorgeschaltete Hochvakuumpumpe.

Der Testgas- bzw. Analysegasanschluss ist weiter mit der Niederdruckseite einer Vorvakuumpumpe verbunden. Dazu sind, beim Teilgegenstromprinzip, eine oder mehrere Hochvakuumpumpenstufen dem Niederdruckeingang der Vorvakuumpumpe vorgeschaltet.

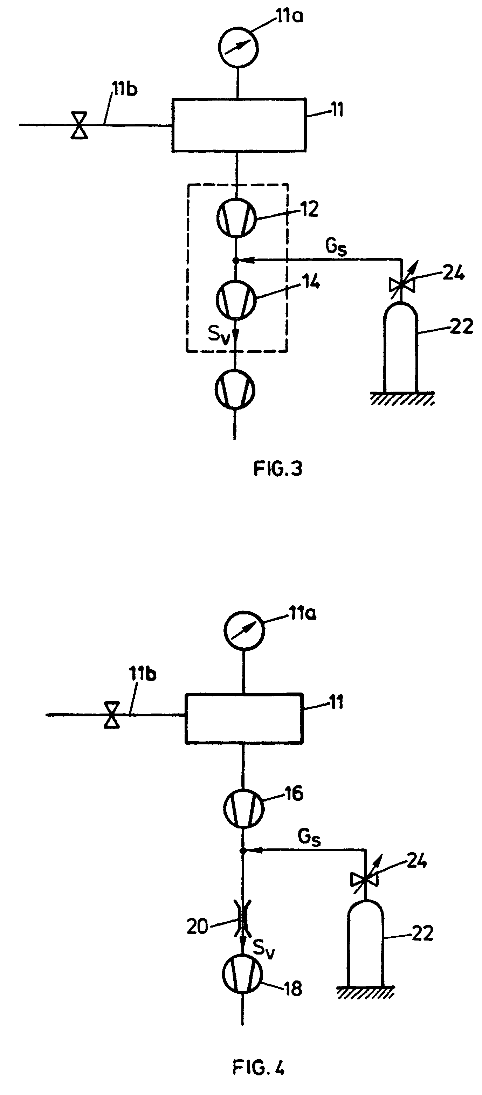

In Fig. 3 ist schematisch eine Anordnung zur Evakuierung eines Analysegeräteinganges 11 dargestellt. Am Eingang 11 ist, wie schematisch dargestellt, das Analysemessgerät, wie ein Massenspektrometer 11a, angeschlossen. 11b stellt die Zuführleitung für Analysegas dar. Es sind zwei Hochvakuumpumpanordnungen 12 und 14 vorgesehen. Es kann sich bei den Pumpanordnungen 12 und 14 um Stufen ein und derselben Pumpe handeln, wie gestrichelt dargestellt, beispielsweise um die Stufen einer Pumpe, deren Stufen 14 im knudsenschen Strömungsbereich oder im viskosen Strömungsbereich arbeiten können.

Die Stufen der Anordnung 12 können dabei durchaus im molekularen Druckbereich arbeiten, womit es sich, bei Einzelpumpenausführung, bei der Pumpe 12 um eine Turbomolekularpumpe handeln kann.

Das Strömungsgas $G_S$ wird erfindungsgemäss niederdruckseitig der im nichtmolekularen Druckbereich arbeitenden Pumpanordnung 14 eingelassen. Durch die überlagerte Gasströmung $S_V$ durch die erwähnte Pumpe bzw. Pumpenstufe 14 wird die partielle Kompression für leichte Gase erhöht. Als die Gasströmung $S_V$ erzeugendes Gas $G_S$ kann ein beliebiges Gas eingesetzt werden, ausser dasjenige Gas, dessen Kompression erhöht werden soll.

Gemäss Fig. 4 sind zur Evakuierung des Rezipienten 11 zwei Hochvakuumpumpen 16 und 18 über eine erfindungsgemäss nichtmolekulare Kompressionsstufe 20 verbunden. Bei der Hochvakuumpumpe 16 kann es sich wiederum um eine beliebige, kontinuierlich arbeitende Pumpe handeln, während es sich bei der Pumpe 18 erfindungsgemäss um eine Pumpe handelt, welche im knudsenschen oder im viskosen Druckbereich arbeitet. Je nach Auslegung der Drosselstelle 20 kann die Pumpe 18 auch im molekularen Bereich arbeiten. Die nichtmolekular strömungsdominierte Kompressionsstufe bzw. Drossel 20 wird gebildet durch eine die Hochdruckseite der Pumpe 16 mit der Niederdruckseite der Pumpe 18 verbindenden Leitung, in welche das Strömungsgas $G_S$, wie dies bereits in Fig. 3 dargestellt ist, von einer Gasquelle, beispielsweise einem Gastank 22, bevorzugterweise einstellbar, wie schematisch mit dem Ventil 24 dargestellt ist, eingelassen wird.

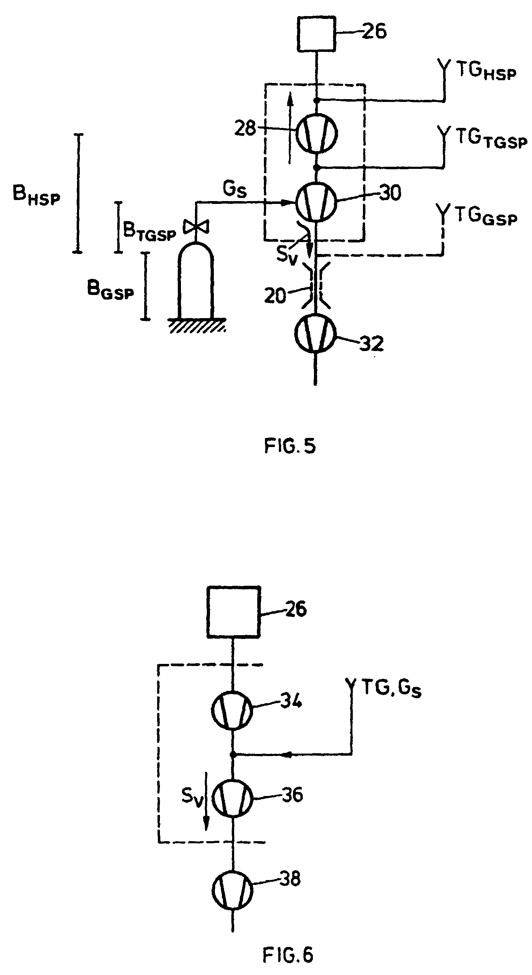

In Fig. 5 ist eine erfindungsgemässe Lecksuch- oder Gasanalyseanordnung, nach dem erfindungsgemässen Verfahren arbeitend, dargestellt. Ein Testgasdetektor bzw. Gasanalysator 26, vorzugsweise ein Massenspektrometer, vorzugsweise ein Quadrupol-Massenspektrometer, ist an die Niederdruckseite einer Hochvakuumpumpe 28 angeschlossen, welcher hochdruckseitig eine weitere Hochvakuumpumpe 30 und eine Vorpumpe 32 nachgeschaltet sind.

In einer Alternative, dem Hauptstromprinzip folgend, ist der Testgas- bzw. Analysegasanschluss $TG_{HSP}$ an den Niederdruckanschluss der Hochvakuumpumpe 28 gelegt, d.h. direkt dem Testgasdetektor bzw. dem Analysegerät 26 zugeführt. In einer weiteren Alternative, dem Teilgegenstromprinzip folgend, ist der Testgas- bzw. Analysegasanschluss $TG_{TGSP}$ zwischen die Hochvakuumpumpen 28 und 30 gelegt, und schliesslich wird in der dritten Alternative, wie gestrichelt bei $TG_{GSP}$ dargestellt, dem Gegenstromprinzip folgend, der Testgas- bzw. Analysegasanschluss niederdruckseitig der Vorpumpe 32 vorgesehen. Beim Teilgegenstrom- und Gegenstromprinzip werden, entsprechend, die Pumpen 28 bzw. 30 und 28 vom Testgas bzw. Analysegas im Gegenstrom durchströmt.

Bei diesem vorgehen zu Gasanalyse- oder insbesondere Lecksuchzwecken werden sehr schnelle Antworts-Anstiegs- und -Abfallzeiten erreicht, im Gegensatz zum Vorgehen nach Fig. 3, was gerade für die Gasanalyse und Lecksuche äusserst vorteilhaft ist.

Für das Hauptstromprinzip wird das Strömungsgas $G_S$ im Bereich $B_{HSP}$, d.h. nach einer Pumpenstufe oder Pumpe, detektorseitig eingelassen.

Für das Teilgegenstromprinzip wird der Gaseinlass im Bereich $B_{TGSP}$ vorgesehen, für das Gegenstromprinzip im Bereich $B_{GSP}$. Die erfindungsgemäss während des Analyse- oder Lecksuchbetriebes überlagerte Gasströmung $S_V$ ist in jedem Fall in der in Fig. 5 dargestellten Richtung. Damit gilt für die jeweils durchströmten Pumpenstufen oder Pumpen die Bedingung, dass sie knudsensche oder viskose Strömung zulassen.

In Analogie zu Fig. 4 kann das Strömungsgas $G_S$ auch einer strömungsdominierten oder leitwertbegrenzenden Kompressionsstufe 20, beispielsweise zwischen Hochvakuumpumpe 30 und Vorpumpe 32, zugeführt werden, generell im jeweiligen Anschlussbereich B.

Für Lecksucher im Schnüffelbetrieb wird vorzugsweise gemäss Fig. 6 als Strömungsgas $G_S$ das Testgas $T_G$ selbst oder ein Teil davon eingesetzt, um die partielle Kompression der Hochvakuumpumpe 36 bzw. der Hochvakuumpumpenstufe 36, welche im knudsenschen bzw. viskosen Druckbereich arbeitet, durch die Strömung $S_V$ zu erhöhen.

Dies verhindert, dass sich der Testgaspartialdruck hochdruckseitig der Pumpe oder Pumpenstufe 36 über die tiefe Testgas-Partialkompression an der im Gegenstrom betriebenen Hochvakuumpumpe 34 auf den Detektor 26 auswirkt. Wie wiederum gestrichelt dargestellt, kann es sich bei den Pumpen 34 und 36 um entsprechend ausgelegte Stufen einer einzigen Hochvakuumpumpe der genannten Art handeln, oder der Testgas- und Strömungsgaseinlass kann an einer als strömungsdominierte Kompressionsstufe eingesetzten Verbindungsleitung zwischen den Pumpen 34 und 36 vorgesehen sein.

Im weiteren ist es durchaus möglich, kaskadiert, die erfindungsgemässe Gasströmung an mehreren hintereinandergeschalteten Pumpen oder Pumpenstufen vorzusehen, um deren Partialkompression kaskadiert zu erhöhen. Es ist auch möglich, das erfindungsgemässe Vorgehen an einer Pumpe einzusetzen, welche in Normalatmosphäre ausstösst.

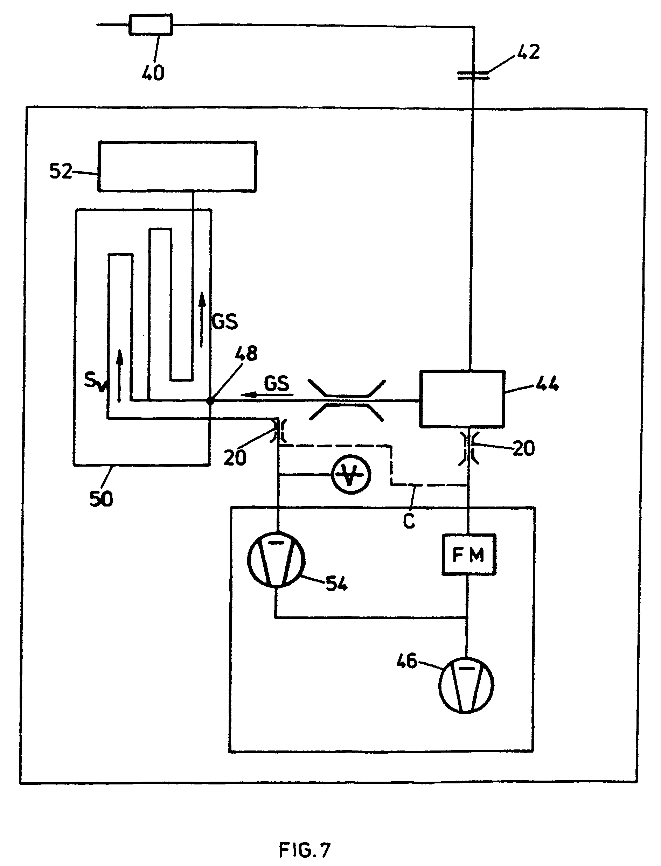

In Fig. 7 ist das Vakuumschema einer bevorzugten erfindungsgemässen Lecksuchanordnung für "Schnüffelbetrieb" dargestellt. Die Schnüffelsonde 40 ist, über eine Schnellkupplung 42, einem Flussteiler 44 zugeführt, welchem einerseits, über ein Flow Meter FM, eine Membranpumpe 46 nachgeschaltet ist. Am Flussteiler 44 wird Testgas als erfindungsgemäss eingesetztes Strömungsgas $G_S$ abgezweigt, um einem Zwischenabgriff 48 einer Holweck-Pumpe 50 zugeführt zu werden. Niederdruckseitig ist die Holweck-Pumpe mit einem Heliumdetektor 52, vorzugsweise einem Massenspektrometer, vorzugsweise einem Quadrupol-Massenspektrometer, verbunden, hochdruckseitig an die Niederdruckseite einer Membranpumpe 54 gelegt, welche hochdruckseitig mit der Niederdruckseite der Membranpumpe 46 verbunden ist.

Die Pumpenstufen der Holweck-Pumpe 50 zwischen dem Zwischenanschluss 48 und dem Niederdruckeinlass der Membranpumpe 54 werden durch das Gas $G_S$ erfindungsgemäss durchströmt, womit daran die partielle Testgaskompression erhöht wird. Durch die Holweck-Stufen detektorseitig strömen leichte Testgasanteile im Gegenstrom GS. Mit einer Anordnung wie in Fig. 7 dargestellt in folgender Realisation:

| | |
|---|---|
| Testgassensor 52 | Quadrupol-Massenspektrometer |
| Holweck-Pumpe 50 | TPD 022 der Firma Balzers-Pfeiffer mit Zwischenanschluss |
| Membranpumpen 54 bzw. 46 | KNF, Typ PJ 10574-8133 |
| Flussteiler 44 | T-Stück mit Kapillaranschluss |
| Schnüffelsonde 40 | Leitung zur Probe |

wurden Vergleichsversuche vorgenommen, wobei einerseits, gemäss der Erfindung der Zwischenanschluss 48, wie in Fig. 7 dargestellt, angeschlossen wurde und, für Vergleichsmessungen, verschlossen wurde, hingegen, wie in Fig. 7 gestrichelt dargestellt, eine Strömungsverbindung C zwischen Niederdruckseite der Membranpumpe 46 und Niederdruckseite der Membranpumpe 54 erstellt wurde.

Gegebenenfalls können nichtmolekular strömungsdominierte oder leitwertbegrenzende Leitungsabschnitte 20 (gestrichelt) auch hier eingebaut werden.

Mit Realisation der gestrichelten Verbindung C wird eine bekannte Gasspülung der Membranvorpumpe 54, bei der es sich bekanntlich nicht um eine kinetische Vakuumpumpe handelt, sondern um eine Verdränger-Vakuumpumpe, erzielt. An die Schnüffelsonde 40 wurde eine Heliumströmung von 120sccm angelegt und sowohl am Zwischenanschluss 48 in bevorzugter Realisation wie auch an der gestrichelt dargestellten Verbindung eine Heliumströmung von 10sccm erstellt.

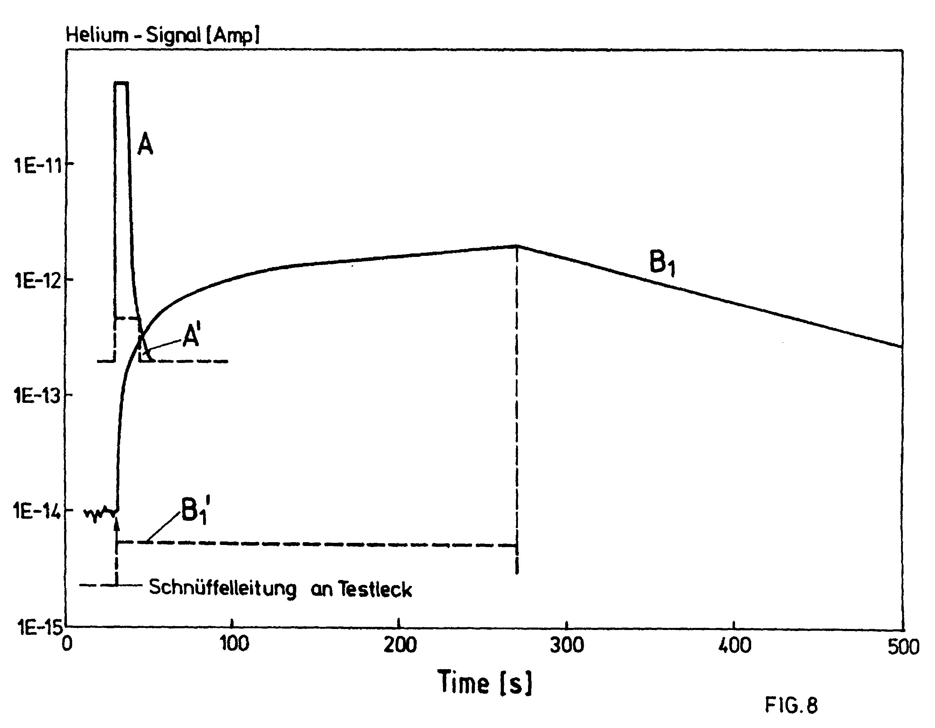

In Fig. 8 zeigt A die Systemantwort der erfindungsgemässen Anordnung, der Verlauf $B_1$ diejenige der bekannten, mit der in Fig. 7 gestrichelt dargestellten Spülgasleitung; je bei A' und B'$_1$ sind die Heliumsignale qualitativ über der Zeit dargestellt.

Bei der erfindungsgemässen Konfiguration wird nach weniger als 5 Sekunden der stationäre Wert erreicht (Verlauf A), in der bekannten dauert es über 200 Sekunden, bis ein einigermassen stabiler Wert erreicht wird (Verlauf $B_1$).

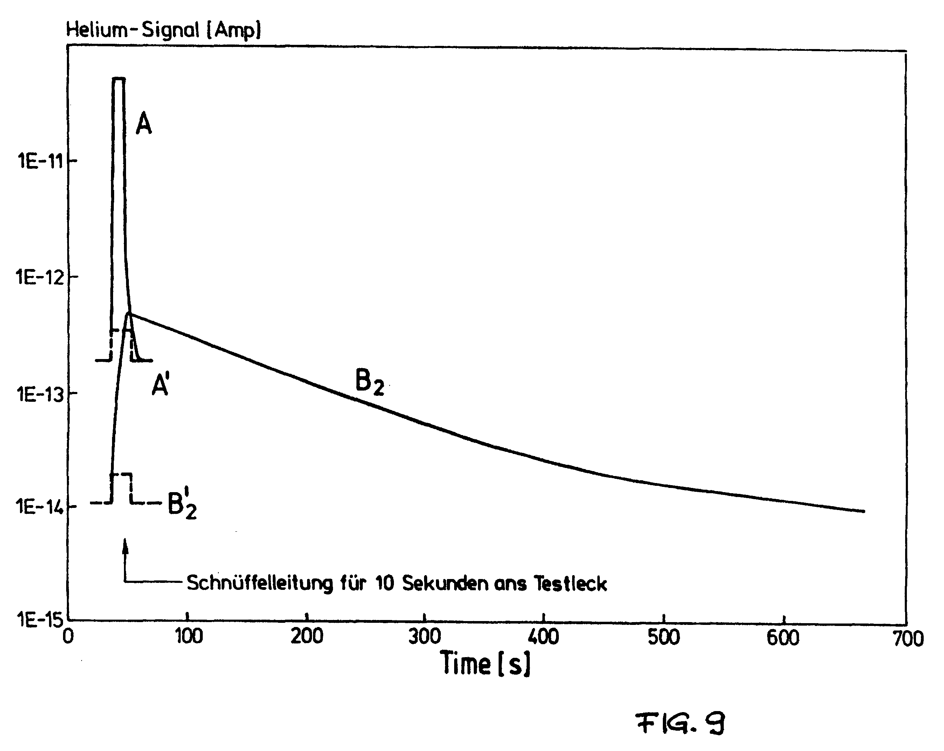

Das Zeitverhalten, wenn die Schnüffelsonde 40 in erfindungsgemässer und vorbekannter Anordnung an das Testleck von $3 \cdot 10^{-3}$mbar l/s angelegt wird, während 10 Sekunden, ist in Fig. 9 bei A, $B_2$ dargestellt. Wiederum sind, rein qualitativ, die Heliumsignale gestrichelt bei A' und B'$_2$ dargestellt. Auffällig ist die extrem kurze Erholzeit bei der erfindungsgemässen Anordnung nach A von rund 10 Sekunden, während die Erholzeit in der vorbekannten Konfiguration gemäss B über 600 Sekunden beträgt.

Somit wird in der bevorzugten Gasanalyse- oder Lecksuchanordnung nach den Fig. 4 bis 7 eine extrem gute Impulsantwort des Messsystems erzielt.

**Patentansprüche**

1. Verfahren zur Gasanalyse, bei dem der Eingang (11) eines Gasanalysators (11a) unter Vakuum gesetzt wird, indem er mit dem Niederdruckeingang einer Pumpenstufe (12; 16; 28; 34; 50) verbunden wird, und mindestens ein Teil des zu analysierenden Gases dem Eingang des Gasanalysators sowie demjenigen der Pumpenstufe zugeführt wird, und bei dem eine weitere Gasströmung (GS) der durch die Pumpenstufe bewirkten Förderströmung überlagert wird, **dadurch gekennzeichnet, dass**

   - der Hochdruckausgang der erwähnten ersten Pumpenstufe (12; 16; 28; 34; 50) mit dem Niederdruckeingang einer weiteren Pumpenstufe (14; 18; 30; 36; 54) wirkverbunden wird,

   - der Gasleitungsabschnitt vom Hochdruckausgang der ersterwähnten Pumpenstufe bis zum Hochdruckausgang der weiteren Pumpenstufe einen nichtmolekular strömungsdominierten Abschnitt hat, worin die weitere Gasströmung (SV) in Gegenrichtung zu einer darin vorherrschenden Diffusionsströmung ($S_D$) erstellt wird und damit die partielle Kompression in diesem Abschnitt eingestellt wird.

2. Gasanalysator mit einem Gasanalysegerät (11a; 26; 52), dessen Eingang an den Niederdruckeingang einer Pumpenstufe (12; 16; 28; 34; 50) angeschlossen ist, mit einem mit dem Eingang des Gasanalysegerätes (11a; 26; 52) sowie demjenigen der Pumpenstufe wirkverbundenen Gaseinlass (11b; TG; 42) für ein zu analysierendes Gas sowie einer weiteren Anschlussleitung (GS) für ein zuzuführendes Strömungsgas, **dadurch gekennzeichnet, dass** der Hochdruckausgang der Pumpenstufe (12; 16; 28; 34; 50) mit dem Niederdruckeingang einer weiteren Pumpenstufe (14; 18; 30; 36; 50) wirkverbunden ist, die Gasanschlussleitung (GS) zwischen dem Hochdruckausgang der ersterwähnten Pumpenstufe (12; 16; 28; 34; 50) und dem Hochdruckausgang der weiteren Pumpenstufe (14; 18; 30; 36; 50) einmündet und, in Förderrichtung der beiden Pumpenstufen betrachtet, zwischen Einmündung der Gasanschlussleitung (GS) und Hochdruckausgang der weiteren Pumpenstufe (14; 18; 30; 36; 50) ein nichtmolekular strömungsdominierter Gasleitungsabschnitt ist.

3. Gasanalysator nach Anspruch 2, **dadurch gekennzeichnet, dass** der nichtmolekular strömungsdominierte Gasleitungsabschnitt mindestens eine Drosselstelle (20) hat.

4. Gasanalysator nach einem der Ansprüche 2 oder 3, **dadurch gekennzeichnet, dass** die weitere Pumpenstufe (14; 30; 36) eine im knudsenschen oder viskosen Druckbereich arbeitende kinetische Pumpenstufe ist.

5. Gasanalysator nach einem der Ansprüche 2 bis 4, **dadurch gekennzeichnet, dass** die ersterwähnte Pumpenstufe (12; 16; 28; 34) im molekularen Druckbereich arbeitet.

6. Gasanalysator nach einem der Ansprüche 2 bis 5, **dadurch gekennzeichnet, dass** die Analysegasleitung (TG) am Eingang des Gasanalysators (26) oder zwischen den Pumpenstufen (28, 30, 32) einmündet.

7. Gasanalysator nach einem der Ansprüche 2 bis 6, **dadurch gekennzeichnet, dass** die beiden Pumpenstufen durch die Stufen einer einzigen Pumpe (50) gebildet sind, vorzugsweise einer Holweck-Pumpe.

8. Verwendung des Verfahrens nach Anspruch 1 oder des Gasanalysators nach einem der Ansprüche 2 bis 7 für die Lecksuche mittels Testgasdetektion.

**Claims**

1. Process for gas analysis in which the input (11) of a gas analyser (11a) is placed under vacuum by being connected with the low pressure input of a pump stage (12; 16; 28; 34; 50), and at least part of the gas to be analysed is supplied to the input of the gas analyser and to that of the pump stage, and in which a further gas flow (GS) is superimposed on the flow created by the pump stage, **characterised in that**

   - the high pressure output of the said first pump stage (12; 16; 28; 34; 50) is operationally connected with the low pressure input of a further pump stage (14; 18; 30; 36; 54),

- the gas line section from the high pressure output of the said first pump stage to the high pressure output of the further pump stage has a section dominated by a non-molecular flow in which the further gas flow (SV) is produced in the opposite direction to a diffusion flow ($S_D$) established therein and hence the partial compression in this section is set.

2. Gas analyser with a gas analyser device (11a; 26; 52), the input of which is connected to the low pressure input of a pump stage (12; 16; 28; 34; 50), with a gas inlet (11b; TG; 42) for a gas to be analysed operationally connected with the input of the gas analyser device (11a; 26; 52) and to that of the pump stage, and with a further connection line (GS) for a flow gas to be supplied, **characterised in that** the high pressure output of the pump stage (12; 16; 28; 34; 50) is operationally connected with the low pressure input of a further pump stage (14; 18; 30; 36; 50), the gas connection line (GS) discharges between the high pressure output of the first pump stage (12; 16; 28; 34; 50) and the high pressure output of the further pump stage (14; 18; 30; 36; 50) and viewed in the pumping direction of the two pump stages, a non-molecular flow-dominated gas line section is present between the discharge opening of the gas connection line (GS) and the high pressure output of the further pump stage (14; 18; 30;36;50).

3. Gas analyser according to claim 2, **characterised in that** the non-molecular flow-dominated gas line section has at least one restriction section (20).

4. Gas analyser according to any of claims 2 or 3, **characterised in that** the further pump stage (14; 30; 36) is a kinetic pump stage operating in the Knudsen or viscous pressure range.

5. Gas analyser according to any of claims 2 to 4, **characterised in that** the first pump stage (12; 16; 28; 34) operates in the molecular pressure range.

6. Gas analyser according to any of claims 2 to 5, **characterised in that** the analysis gas line (TG) discharges at the input of the gas analyser (26) or between the pump stages (28; 30; 32).

7. Gas analyser according to any of claims 2 to 6, **characterised in that** the two pump stages are formed by the stages of a single pump (50), preferably a Holweck pump.

8. Use of the process according to claim 1 or the gas analyser according to any of claims 2 to 7 to search for leaks by means of test gas detection.

**Revendications**

1. Procédé pour l'analyse de gaz selon lequel on met sous vide l'entrée (11) d'un analyseur de gaz (11a) en la reliant à l'entrée basse pression d'un étage de pompe (12 ; 16 ; 28 ; 34 ; 50) et en amenant une partie au moins du gaz à analyser à l'entrée de l'analyseur de gaz et à celle de l'étage de pompe, et selon lequel on ajoute au courant de circulation provoqué par l'étage de pompe un autre courant de gaz (GS), **caractérisé en ce que**

   - la sortie haute pression dudit premier étage de pompe (12 ; 16 ; 28 ; 34 ; 50) est mise en relation fonctionnelle avec l'entrée basse pression d'un autre étage de pompe (14 ; 18 ; 30 ; 36 ; 54),
   - la section de conduite de gaz qui va de la sortie haute pression du premier étage de pompe à la sortie haute pression de l'autre étage de pompe a une section à écoulement non moléculaire prédominant dans laquelle l'autre courant (SV) est produit en sens inverse par rapport à un courant de diffusion ($s_D$) prédominant, et la compression partielle est ainsi réalisée dans cette section.

2. Analyseur de gaz comportant un appareil d'analyse de gaz (11a ; 26 ; 52) dont l'entrée est reliée à l'entrée basse pression d'un étage de pompe (12 ; 16 ; 28 ; 34 ; 50), une admission de gaz (11b ; TG ; 42) pour un gaz à analyser, qui est en relation fonctionnelle avec l'entrée de l'appareil d'analyse de gaz (11a ; 26 ; 52) et avec celle de l'étage de pompe, et une autre conduite de raccordement (GS) pour un gaz d'écoulement à amener,
   **caractérisé en ce que** la sortie haute pression de l'étage de pompe (12 ; 16 ; 28 ; 34 ; 50) est en relation fonctionnelle avec l'entrée basse pression d'un autre étage de pompe (14 ; 18 ; 30 ; 36 ; 50), la conduite de raccordement de gaz (GS) débouche entre la sortie haute pression du premier étage de pompe (12 ; 16 ; 28 ; 34 ; 50) et la sortie haute pression de l'autre étage de pompe (14 ; 18 ; 30 ; 36 ; 50), et une section de conduite de gaz à écoulement non moléculaire prédominant se trouve entre le débouché de la conduite de raccordement de gaz (GS) et la sortie haute pression de l'autre étage de pompe (14 ; 18 ; 30 ; 36 ; 50), considéré en sens de circulation des deux étages de pompe.

3. Analyseur de gaz selon la revendication 2, **caractérisé en ce que** la section de conduite de gaz à écoulement non moléculaire prédominant a au moins un étranglement (20).

4. Analyseur de gaz selon la revendication 2 ou 3, **caractérisé en ce que** l'autre étage de pompe (14 ; 30 ; 36) est un étage de pompe cinétique qui fonctionne dans le domaine des pressions de Knudsen ou visqueuses.

5. Analyseur de gaz selon l'une des revendications 2 à 4, **caractérisé en ce que** le premier étage de pompe (12 ; 16 ; 28 ; 34) fonctionne dans le domaine des pressions moléculaires.

6. Analyseur de gaz selon l'une des revendications 2 à 5, **caractérisé en ce que** la conduite de gaz d'analyse (TG) débouche à l'entrée de l'analyseur de gaz (26) ou entre les étages de pompe (28, 30, 32).

7. Analyseur de gaz selon l'une des revendications 2 à 6, **caractérisé en ce que** les deux étages de pompe sont formés par les étages d'une seule pompe (50), de préférence une pompe Holweck.

8. Utilisation du procédé selon la revendication 1 ou de l'analyseur de gaz selon l'une des revendications 2 à 7 pour la recherche de fuites par détection par gaz témoin.

$S_V$

$S_D$

p

$P_{y1}$

$P_{y3}$

5

1

3

x

L

FIG.1

FIG.2

FIG.3

FIG. 4

FIG. 5

FIG. 6

FIG. 7

FIG. 8

EP 0 718 613 B1

FIG. 9

EP 0 718 613 B1